## Europäisches Patentamt
## European Patent Office
## Office européen des brevets

(19)

(11) Numéro de publication: **0 132 265**
**B1**

(12) **FASCICULE DE BREVET EUROPÉEN**

(45) Date de publication du fascicule du brevet:
**06.12.89**

(21) Numéro de dépôt: **84900515.2**

(22) Date de dépôt: **23.01.84**

(86) Numéro de dépôt international:
**PCT/FR 84/00015**

(87) Numéro de publication internationale:
**WO 84/02914 (02.08.84 Gazette 84/18)**

(51) Int. Cl.⁴: **C 08 J 9/12**, C 08 J 9/14,
C 08 L 61/00 //
C08G8/06, C08G16/02,
B32B27/42

(54) **PROCEDE DE FABRICATION DE PRODUITS CELLULAIRES ET DE STRATIFIES A BASE DE PREPOLYMERES FURANIQUES.**

(30) Priorité: **26.01.83 FR 8301151**

(43) Date de publication de la demande:
**30.01.85 Bulletin 85/5**

(45) Mention de la délivrance du brevet:
**06.12.89 Bulletin 89/49**

(84) Etats contractants désignés:
**AT BE CH DE FR GB LI LU NL SE**

(56) Documents cité:
**FR-A-2 506 918**

**Le dossier contient des informations techniques présentées postérieurement au dépôt de la demande et ne figurant pas dans le présent fascicule.**

(73) Titulaire: **ASHLAND- AVEBENE, société anonyme, 6/8, rue du Quatre Septembre, F-92136 Issy- Les- Moulineaux Cedex (FR)**

(72) Inventeur: **Anciaux, Martine, La Grande Montagne, Liausson, F-34800 Clermont- L'Herault (FR)**
Inventeur: **Michel, Pierre, La Grande Montagne, Liausson, F-34800 Clermont- H'Herault (FR)**

(74) Mandataire: **Kremer, Robert A.M., BUREAU D.A. CASALONGA - JOSSE Morassistrasse 8, D-8000 München 5 (DE)**

LIBER, STOCKHOLM 1989

EP 0 132 265 B1

**Description**

La présente invention vise la fabrication des produits cellulaires et de stratifiés à base de prépolymères, furaniques, ayant une excellente résistance au feu et une grande dureté ainsi qu'un bon pouvoir isolant.

A cet effet, l'invention a pour objet un procédé permettant d'assurer la poursuite de la polycondensation et d'assurer la réticulation du prépolymère furanique à la température ordinaire et suffisamment rapidement pour assurer pratiquement simultanément le durcissement et l'expansion éventuelle de cette résine, dans des temps très courts.

Il est connu dans la technique des expansés furaniques que l'on peut expanser des résines furaniques, seules ou en association avec d'autres résines en particulier d' urée en utilisant comme catalyseur un acide et essentiellement l'acide phosphorique. L'incorporation d'acides se fait à des concentrations élevées (10 à 15 %) et les réactions de polymérisation sont lentes et nécessitent une post-cuisson pour parvenir à une polymérisation complète.

La demanderesse a constaté qu'il était possible d'accélérer la réaction de polymérisation et de permettre à la fois le durcissement et l'expansion des résines furaniques en remplaçant une partie de l'acide utilisé comme catalyseur par de l'oxychlorure de phosphore et/ou du tétrachlorure de silicium dissous dans un phosphate de glycol ou de phénol et en opérant à la température ordinaire. Un tel procédé fait l'objet de la demande de brevet français n° 2 508 918 de la demanderesse.

Le dérivé chloré est hydrolysé par les radicaux OH présents dans le milieu de réaction et en formation par poursuite de la polycondensation des produits furaniques et l'hydrolyse étant fortement exothermique, le fort et rapide dégagement de chaleur produit par la formation de $H_3PO_4$ et HCl dans le cas de $OPCl_3$, et de $SiO_2$ et HCl dans le cas de $SiCl_4$, a pour effet d'accélérer la réaction de réticulation et de permettre à la fois le durcissement et l'expansion par vaporisation de l'eau incluse et ce, avec des vitesses très élevées.

Cependant, l'adjonction d'acides peut conduire, à la trimérisation, à une séparation en deux phases avec comme conséquence, un deuxième exotherme qui entraîne en général la destruction du matériau par auto-combustion.

Or, la demanderesse a découvert, au cours de ses recherches, qu'une combinaison particulière de résines furaniques associée à un système catalytique bien déterminé, permettait d'obtenir des expansés furaniques ayant une résistance accrue à la température, avec des vitesses d'expansion encore plus élevées que celles obtenues précédemment.

La présente invention a donc pour objet un procédé de fabrication de produits cellulaires et de stratifiés à base de prépolymères furaniques anhydres possédant des groupements OH libres, dans lequel on opère à la température ordinaire, en utilisant comme agent de réticulation et d'expansion, du tétrachlorure de silicium et/ou de l'oxychlorure de phosphore en faibles quantités, qui consiste à utiliser comme prépolymères furaniques, une combinaison d'une résine d'alcool furfurylique et/ou d'une résine furfuralphénol (phénol ou bisphénol A) avec une résine de bishydroxyméthylfurane (BHMF) sans utiliser d'acide, le tétrachlorure de silicicum et/ou l'oxychlorure de phosphore étant utilisés dans des proportions de 0,1 à 5 % en poids par rapport à la résine mise en oeuvre.

Il résulte de la combinaison de polymères et du système catalytique selon l'invention que l'on obtient des expansés stables à 350°C et passant positivement le test du four à moufle (15 minutes à 500°C), ce qui n'était pas le cas pour les formulations à l'acide décrites dans la demande de brevet 2 508 918 de la demanderesse.

La suppression de l'acide donne aussi la possibilité de travailler avec des machines plus simples à deux composants au lieu de trois.

Le tétrachlorure de silicium et l'oxychlorure de phosphore sont des produits extrêmement réactifs et leur incorporation directe dans les résines furaniques exige des précautions particulières et délicates.

Il est donc préférable de les dissoudre dans des liquides stables, inertes dans les conditions de la réaction, ou actifs dans le milieu réactionnel.

Il a été trouvé particulièrement intéressant d'utiliser le trichlorotrifluoroéthane, le trichlorofluorométhane, le pentane, le tétrachlorure de carbone, le polytétraméthylène éther glycol et différents phosphates parmi lesquels, particulièrement, le phosphate de néopentylglycol bromé ou non, le trichlorobétaéthyl phosphate ou le trichlorobétapropyl phosphate.

L'utilisation du phosphate néopentylglycol bromé donne des résultats très intéressants, étant donné que la synthèse incomplète peut laisser libre une certaine quantité d'oxychlorure de phosphore utilisé pour les besoins décrits plus haut. De plus, il apporte une amélioration à l'ininflammabilité.

L'utilisation de tétrachlorure de carbone ayant un point d'ébullition élevé permet d'utiliser des mélanges réactionnels à plus haut pic exothermique (correspondant à la trimérisation), avec comme conséquence des vitesses d'expansion et de durcissement plus élevées, sans danger de bulles ou de fissuration.

L'utilisation de faibles quantités de trichlorobétapropyl phosphate permet d'élever la viscosité du mélange catalytique, ce qui est important pour des questions relevant de la technologie industrielle.

L'utilisation de tétrachlorure de silicium en très faible quantité apporte d'une manière surprenante des qualités de cohérence et d'homogénéité aux expansés à qualité mécanique améliorée par rapport à d'autres expansés de mêmes masses volumiques. L'obtention de matières microcellulaires et la précipitation de silice en sont, en grande partie, responsables.

Le tétrachlorure de silicium dissous dans du tétrachlorure de carbone constitue un système catalytique préféré selon l'invention.

Les différentes formulations obtenues en faisant jouer les différentes résines dans leur nature et leurs proportions avec des quantités variables d'oxychlorure de phosphore et de tétrachlorure de silicium répartis dans les solvants décrits plus haut, permettent d'obtenir des matériaux expansés ayant une masse volumique variant entre 12 et 600 kg/m$^3$, possédant des qualités physicochimiques particulières suivant leur originalité.

Selon un mode de réalisation préféré de l'invention, on utilise comme prépolymère furanique, une combinaison d'une résine furfural-bisphénol A avec une résine de BHMF. Une telle combinaison permet d'obtenir des expansions très rapides (quelques secondes) ce qui permet le projetage des matériaux cellulaires obtenus au moyen de machines adéquates.

Il est à noter que l'augmentation en faibles proportions de la résine furfural-bisphénol A par rapport à la résine de BHMF permet d'ajuster les vitesses de réaction et d'augmenter encore la résistance à la température.

Dans le procédé de l'invention, on peut ajouter au milieu réactionnel des résines phénoliques, polyesters et polyuréthanes ou des composés chimiques polymérisables divers tels que des isocyanates, sans diminuer les vitesses d'expansion et de polymérisation.

L'incorporation de charges finement divisées telles que cendres flottantes et volantes, sphérules de verre pleines ou creuses, fibres de verre coupées ou broyées, silice, kieselguhr, ou d'autres charges inertes très finement divisées (mica, asbeste...) est un moyen de faire varier les masses volumiques et autres caractéristiques, tant mécaniques que physiques et chimiques, otenues par une expansion en blocs ou sous pression. Il est également possible d'ajouter du trioxyde de bore en faibles proportions (10 à 25 %) par rapport à la résine, ce qui améliore encore la tenue au feu des produits obtenus.

On peut également ajouter au mélange réactionnel certains additifs tels que des régulateurs de mousse (tensio-actifs).

La présente invention sera mieux illustrée à l'aide des exemples non limitatifs suivants.

Dans les exemples, les quantités sont des parties en poids (pp).

### Exemple 1

| | |
|---|---|
| Résine BHMF (Farez B 260 de Quaker Oats) | 50 pp |
| Résine d'alcool furfurylique | 200 pp |
| Tensio-actif Si3193 (Rhône Poulenc) | 8 pp |
| SiCl$_4$ | 3 pp |

Au mélange des trois premiers composés, on ajoute à 10 - 20°C, la quantité requise de SiCl$_4$ en agitant vigoureusement, fraction par fraction; l'expansion se fait après 40 secondes environ, avec élévation de température rapide. Le durcissement et le démoulage peuvent s'effectuer après 2 minutes.

### Exemple 2

| | |
|---|---|
| Résine Quacorr 1300 à base d'alcool furfurylique (Quaker Oats) | 200 pp |
| Résine BHMF Farez B 260 (Quaker Oats) | 50 pp |
| Tensio-actif Si3193 (Rhône-Poulenc) | 5 pp |
| Néopentylglycol phosphate | 25 pp |
| OPCl$_3$ | 5 pp |

### Exemple 3

| | |
|---|---|
| Résine BHMF Farez B 260 (Quaker Oats) | 200 pp |
| Résine furfural-bisphénol A | 25 pp |
| Polytétraméthylèneétherglycol | 30 pp |
| OPCl$_3$ | 5 pp |
| Diphénylméthanediisocyanate | 30 pp |

### Exemple 4

| | |
|---|---|
| Résine BHMF (Farez B 260 de Quaker Oats) | 25 pp |
| Résine à base d'alcool furfurylique | 300 pp |
| Cendres flottantes (Fillite, (Densité 0,2) | 150 pp |
| Trichlorotrifluoroéthane | 15 pp |
| SiCl$_4$ | 1 pp |

### Exemple 5

| | |
|---|---|
| Résine furfural/bisphénol A | 300 pp |
| Résine polyester (AROPOL-ASHLAND) | 100 pp |
| Résine BHMF Farez B 260 (Quaker Oats) | 50 pp |
| Tensio-actif Si3193 (Rhône-Poulenc) | 5 pp |
| CCl$_3$F | 10 pp |
| Oxychlorure de phosphore | 6 pp |

**Exemple 6**

| | |
|---|---|
| Résine de BHMF Farez B 260 (Quaker Oats) | 300 g |
| Résine de bisphénol A/furfural | 10 g |
| Tensio-actif Si3193 | 7,5 g |
| Système catalytique (CCl$_4$ | 35 g |
| (SiCl$_4$ | 3 g |

**Exemple 7**

| | |
|---|---|
| Résine BHMF Farez B 260 (Quaker Oats, | 100 g |
| Résine Bisphénol A/furfural | 100 g |
| Résine polyester (Aropol-Ashland) | 100 g |
| Tensio-actif Si3193 | 7,5 g |
| Système catalytique (CCl$_4$ | 30 g |
| (SiCl$_4$ | 3,5 g |

**Exemple 8**

| | |
|---|---|
| Résine BHMF Farez B 260 (Quaker Oats) | 300 g |
| Résine bisphénol A/furfural | 10 g |
| Résine Urée-furfural | 15 g |
| Tensio-actif Si3193 | 8 g |
| Système catalytique, trichlorobétapropylphosphate | 25 g |
| Trichlorotrifluoroéthane | 30 g |
| SiCl$_4$ | 3,5 g |

**Exemple 9**

| | |
|---|---|
| Résine de BHMF Farez B 260 (Quaker Oats) | 200 g |
| Résine de bisphénol A/furfural | 10 g |
| Tensio-actif Si 3193 | 7,5 g |
| Polyol EKAMERE 259, UGK | 50 g |
| Diphénylméthanediisocyanate | 80 g |
| Système catalytique (CCl$_4$ | 30 g |
| (SiCl$_4$ | 2,5 g |

Ces différents exemples permettent d'obtenir des expansés de 12 à 300 kg/m$^3$; l'augmentation en proportions des charges ou la coulée sous pression permettent d'augmenter la masse volumique.

Sont indiquées, ci-dessous, les préparations des résines utilisées dans certains des exemples et préparées au laboratoire.

**Préparation de la résine furfural-bisphénol A des exemples 3 et 5 à 9**

On mélange dans un réacteur à reflux 233 g de bisphénol A dissous dans 300 cm$^3$ d'acétone, de 480 g de phénol et de 25 g de KOH dissous dans 20 g d'eau.

600 g de furfural sont introduits par petites fractions dans le mélange et celui-ci est maintenu à 95°C pendant une heure environ avec agitation permanente.

On neutralise par 23 g d'acide lactique, puis on distille. Lorsque la température intérieure du mélange réactionnel atteint 150 à 157°C après une heure, on décante la résine qui a dès lors une viscosité, à température ordinaire, de 800 à 1000 cP.

**Préparation de la résine à base d'alcool furfurylique de l'exemple 4**

On mélange dans un réacteur à reflux les produits suivants:

700 g d'alcool furfurylique, 187 g de formaldéhyde à 30%, 17 g d'alcool méthylique, 9 à 12 cm$^3$ d'acide oxalique dilué (10 g d'acide oxalique pour 90 g d'eau).

Après chauffage au reflux et agitation pendant une heure à 98 - 100°C, on neutralise, par exemple avec de la triéthanolamine (4 à 7 cm$^3$).

On récupère par distillation 225 à 250 cm$^3$ d'eau et d'alcool méthylique. La résine est alors décantée et possède suivant la quantité d'eau extraite, une viscosité à 20°C de 1000 à 18 000 cP.

Elle peut être utilisée telle quelle (basse viscosité) soit diluée avec 60 g d'alcool furfurylique et 60 g de furfuraldéhyde (viscosité = 15 000 à 18 000 cP).

Les vitesses d'expansion, de trimérisation et de tack free (non collant, proche du démoulage) sont très rapides: 1 à 2 secondes pour le début d'expansion et 50 à 60 secondes pour le tack free, ce qui est intéressant dans le domaine de la projection sur murs ou parois quelconques. Cependant, pour des raisons pratiques (moulage complexe par exemple), il peut être intéressant de ralentir les réactions. Elles sont fonction de l'état de condensation des résines et des proportions de $OPCl_3$ et de $SiCl_4$.

Les produits cellulaires obtenus sont très intéressants en tant que matériaux pare-feu, car ils sont ininflammables et d'une excellente stabilité dimensionnelle à chaud, inertes chimiquement, et ne dégagent pas de fumées ou de gaz toxiques en cas d'incendie.

Voici certaines de leurs excellentes caractéristiques:

1) Autoextinguibilité classement ($M_1$) - norme française n° 92501 ($M_1$ limite supérieure)
2) Peu ou pas de fumées observées au cours du test $M_1$
3) Stabilité tridimensionnelle: 200 à 400°C suivant les formulations
4) Coefficient d'isolation thermique $\lambda$ = 0,025 à 0,04 Kc/m/h/°C jusqu'à 200°C environ.

De plus, en tant qu'expansés à cellules fermées, les matériaux cellulaires furaniques sont de très bons isolants.

Il est possible de revêtir ces isolants par des techniques FRP (Fiber Reinforcing Plastics) avec des stratifiés polyester, époxy ou furaniques et SMC (Sheet Molding Compound) avec des résines polyester, époxy ou furaniques.

Les isolants, les mousses structurelles et les stratifiés, en fonction de leur stabilité thermique et de leur ininflammabilité, peuvent être utilisés en tant que pare-feu dans la construction ou l'aviation, la carrosserie de tout engin mobile et les containers, en général.

Le procédé permet, en outre, d'obtenir des peaux de moulage solides, même pour des pièces de basse densité. L'épaisseur de ces peaux de moulage peut varier entre 1 à 5 mm et présenter une dureté élevée (dureté Shore: 90-93 DIN 53505).

Ces produits cellulaires peuvent avoir une masse volumique variant entre 12 et 600 $kg/m^3$, suivant les charges éventuellement incorporées, le degré d'expansion ou la formulation.

Les exemples décrits ci-dessus ne doivent pas être considérés comme limitatifs. Il est évident que les variations en proportions de l'une ou l'autre résine furanique entre elles, les variations de proportions d'$OPCL_3$ et de $SiCl_4$, l'incorporation de diverses charges permettent d'obtenir toute une série de formulations à caractéristiques propres.

## Revendications

1. Procédé de fabrication de produits cellulaires et de stratifiés à base de prépolymères furaniques anhydres, possédant des groupements OH libres, dans lequel on opère à la température ordinaire en utilisant comme agent de réticulation et d'expansion, du tétrachlorure de silicium et/ou de l'oxychlorure de phosphore en faibles quantités, caractérisé par le fait qu'on utilise comme prépolymères furaniques une combinaison d'une résine d'alcool furfurylique et/ou d'une résine furfural-phénol (phénol et/ou bisphénol A) avec une résine de bishydroxyméthylfurane, sans utiliser d'acide, le tétrachlorure de silicium et/ou l'oxychlorure de phosphore étant utilisés dans des proportions de 0,1 à 5 % en poids par rapport à la résine mise en oeuvre.

2. Procédé selon la revendication 1, caractérisé par le fait que le tétrachlorure de silicium et/ou l'oxychlorure de phosphore sont dissous dans le trichlorotrifluoroéthane, le trichlorofluorométhane, le pentane, le tétrachlorure de carbone, le polytétraméthylène étherglycol ou dans des phosphates tels que le phosphate de néopentylglycol bromé ou non, le trichlorobétaéthylphosphate ou le trichlorobétapropyl phosphate.

3. Procédé selon la revendication 1 ou 2, caractérisé par le fait qu'on utilise comme prépolymère furanique une combinaison d'une résine furfurbisphénol A avec une résine de bishydroxyméthylfurane.

4. Procédé selon l'une quelconque des revendications 1 à 3, caractérisé par le fait qu'on utilise comme agent de réticulation et d'expansion le tétrachlorure de silicium.

5. Procédé selon la revendication 4, caractérisé par le fait qu'on utilise comme agent de réticulation et d'expansion du tétrachlorure de silicium dissous dans du tétrachlorure de carbone.

6. Procédé selon l'une quelconque des revendications 1 à 5, caractérisé par le fait que le prépolymère furanique est utilisé en combinaison avec d'autres résines telles que les résines phénoliques, polyesters et polyuréthanes ou des composés chimiques polymérisables tels que des isocyanates.

7. Procédé selon l'une quelconque des revendications 1 à 6, caractérisé par le fait qu'on ajoute au mélange résine/agent de réticulation et d'expansion, des charges telles que les cendres flottantes et volantes, les sphérules de verre, les fibres de verre, la silice, le kieselguhr ou le trioxyde de bore.

8. Procédé selon l'une quelconque des revendications 1 à 7, caractérisé par le fait qu'on incorpore en outre des additifs tels que des régulateurs de mousse.

**Patentansprüche**

1. Verfahren zur Herstellung zelliger Produkte und von Schichtstoffen auf Basis wasserfreier Furan-Vorpolymeren, die freie OH-Gruppen aufweisen, wobei man bei Raumtemperatur arbeitet und als Vernetzungsmittel und als Expansionsmittel Siliciumtetrachlorid und/oder Phosphoroxychlorid in geringen Mengen einsetzt, dadurch gekennzeichnet, daß man als Furan-Vorpolymere eine Kombination eines Furfurylalkohol-Harzes und/oder eines Furfural-Phenolharzes (Phenol und/oder bis-Phenol A) mit einem bis-Hydroxymethylfuranharz ohne Einsatz einer Säure verwendet, wobei das Siliciumtetrachlorid und/oder das Phosphoroxychlorid in Mengen von 0,1 bis 5 Gew.-%, bezogen auf das eingesetzte Harz, verwendet werden.

2. Verfahren nach Anspruch 1, dadurch gekennzeichnet, daß das Siliciumntetrachlorid und/oder Phosphoroxychlorid in Trichlortrifluoräthan, Trichlorfluormethan, Pentan, Tetrachlorkohlenstoff, Polytetramethylenätherglykol oder in Phosphaten, wie bromiertem oder nicht bromiertem Neopentylglykolphosphat, Trichlorbetaäthylphosphat oder Trichlorbetapropylphosphat gelöst sind.

3. Verfahren nach Anspruch 1 oder 2, dadurch gekennzeichnet, daß man als Furan-Vorpolymer eine Kombination eines Furfural-bisphenol A-Harzes mit einem bis-HydroxymethylfuranHarz verwendet.

4. Verfahren nach einem der Ansprüche 1 bis 3, dadurch gekennzeichnet, daß man als Vernetzungs- und Expansionsmittel das Siliciumtetrachlorid verwendet.

5. Verfahren nach Anspruch 4, dadurch gekennzeichnet, daß man als Vernetzungs- und Expansionsmittel ein in Tetrachlorkohlenstoff gelöstes Siliciumtetrachlorid verwendet.

6. Verfahren nach einem der Ansprüche 1 bis 5, dadurch gekennzeichnet, daß das Furan-Vorpolymer in Kombination mit anderen Harzen, wie Phenolharzen, Polyestern und Polyurethanen oder polymerisierbaren chemischen Verbindungen, wie den Isocyanaten, verwendet wird.

7. Verfahren nach einem der Ansprüche 1 bis 6, dadurch gekennzeichnet, daß man der Mischung aus Harz und Vernetzungs- und Expansionsmittel Füllmittel, wie Schwimm- und Flugasche, Glaskugeln, Glasfasern, Kieselerde, Kieselgur oder Bortrioxid, hinzufügt.

8. Verfahren nach einem der Ansprüche 1 bis 7, dadurch gekennzeichnet, daß man weiters Additive, wie z. B. Schaumregulatoren, beimengt.

**Claims**

1. Process for the manufacture of cellular and laminated products based on anhydrous furan-related prepolymers containing free OH groups, which is carried out at ordinary temperature, using silicon tetrachloride and/or phosphorous oxychloride in small quantities as a crosslinking and blowing agent, characterized in that the furan-related prepolymers employed are a combination of a furfuryl alcohol resin and/or of a furfural-phenol (phenol and/or bisphenol A) resin with a bishydroxymethylfuran resin, without employing acid, the silicon tetrachloride and/or the phosphorus oxychloride being employed in proportions of 0.1 to 5 % by weight relative to the resin used.

2. Process according to Claim 1, characterized in that the silicon tetrachloride and/or the phosphorus oxychloride are dissolved in trichlorotrifluoroethane, trichlorofluoromethane, pentane, carbon tetrachloride, polytetramethylene ether glycol or in phopshates such as neopentyl glycol phosphate, brominated or otherwise, beta-trichloroethyl phosphate or betatrichloropropylphosphate.

3. Process according to Claim 1 or 2, characterised in that the furan-related propolymer employed is a combination of a furfural-bisphenol A resin with a bishydroxymethylfuran resin

4. Process according to any one of Claims 1 to 3, characterized in that silicon tetrachloride is employed as a crosslinking and blowing agent.

5. Process according to Claim 4, characterized in that silicon tetrachloride dissolved in carbon tetrachloride is employed as a crosslinking and blowing agent.

6. Process-according to any one of Claims 1 to 5, characterized in that the furan-related prepolymer is employed in combination with other resins such as phenolic, polyester and polyurethane resins or polymerizable chemical compounds such as isocyanates.

7. Process according to any one of Claims 1 to 6, characterized in that fillers such as flue dust and fly ash, ballotini, glass fibres, silica, kieselguhr or boron trioxide are added to the mixture of resin and crosslinking and blowing agent.

8. Process according to any one of claims 1 to 7, characterized in that additives such as foam regulators are additionally incorporated